# EUROPÄISCHE PATENTSCHRIFT

(11) **EP 2 812 608 B1**
(45) Veröffentlichungstag und Bekanntmachung des Hinweises auf die Patenterteilung: **16.03.2016**
(21) Anmeldenummer: 13701374.4
(22) Anmeldetag: 10.01.2013
(51) Int. Cl.: F16H 3/66, F16H 3/72, B60K 6/365, B60K 6/48

(54) **MEHRSTUFENGETRIEBE**
MULTI-RATIO TRANSMISSION
BOÎTE DE VITESSES MULTI-ÉTAGÉE

(30) Priorität: 06.02.2012 DE 102012201682
(43) Veröffentlichungstag der Anmeldung: 17.12.2014
(73) Patentinhaber: ZF Friedrichshafen AG, 88046 Friedrichshafen (DE)
(72) Erfinder: BECK, Stefan, 88097 Eriskirch (DE); WEHLEN, Timo, 88045 Friedrichshafen (DE)
(86) Internationale Anmeldenummer: PCT/EP2013/050350
(87) Internationale Veröffentlichungsnummer: WO 2013/117371

(56) Entgegenhaltungen:
- DE-A1-102009 047 265
- US-A1- 2009 305 837
- US-A1- 2010 069 191
- US-A1- 2010 210 399

## Beschreibung

Die vorliegende Erfindung betrifft ein Mehrstufengetriebe in Planetenbauweise, insbesondere ein Automatgetriebe für ein Kraftfahrzeug, gemäß dem Oberbegriff des Patentanspruchs 1.

Automatgetriebe, insbesondere für Kraftfahrzeuge, umfassen nach dem Stand der Technik Planetenradsätze, die mittels Reibungs- bzw. Schaltelementen, wie etwa Kupplungen und Bremsen, geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung, verbunden sind.

Ein derartiges Automatgetriebe ist beispielsweise aus der DE 199 12 480 B4 der Anmelderin bekannt. Es umfasst drei Einsteg-Planetenradsätze sowie drei Bremsen und zwei Kupplungen zum Schalten von sechs Vorwärtsgängen und einem Rückwärtsgang, eine Antriebswelle und eine Abtriebswelle, wobei der Steg des ersten Planetenradsatzes mit dem Hohlrad des zweiten Planetenradsatzes und der Steg des zweiten Planetenradsatzes mit dem Hohlrad des dritten Planetenradsatzes ständig verbunden ist und die Antriebswelle direkt mit dem Sonnenrad des zweiten Planetenradsatzes verbunden ist.

Ferner ist bei dem bekannten Getriebe vorgesehen, dass die Antriebswelle über die erste Kupplung mit dem Sonnenrad des ersten Planetenradsatzes und über die zweite Kupplung mit dem Steg des ersten Planetensatzes verbindbar ist, wobei das Sonnenrad des ersten Planetenradsatzes über die erste Bremse mit einem Gehäuse des Getriebes verbindbar ist und der Steg des ersten Planetenradsatzes über die zweite Bremse mit dem Gehäuse des Getriebes verbindbar ist, wobei das Sonnenrad des dritten Planetenradsatzes über die dritte Bremse mit dem Gehäuse des Getriebes verbindbar ist. Die Abtriebswelle des Getriebes ist mit dem Steg des dritten Planetenradsatzes und dem Hohlrad des ersten Planetenradsatzes ständig verbunden.

Ferner ist aus der DE 29 36 969 A1 ein 9-Gang-Mehrstufengetriebe bekannt; es umfasst acht Schaltelemente und vier Planetenradsätze, wobei ein Planetenradsatz als Vorschaltgetriebe dient und das Hauptgetriebe einen Simpson-Satz und einen weiteren als Umkehrgetriebe dienenden Planetenradsatz aufweist.

Weitere Mehrstufengetriebe sind beispielsweise aus der DE 10 2005 010 210 A1 und der DE 10 2006 006 637 A1 der Anmelderin bekannt.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe einen geringen Bauaufwand, insbesondere eine geringe Anzahl an Schaltelementen, erfordern und bei sequentieller Schaltweise Doppelschaltungen, d.h. ein Zu- bzw. Abschalten von zwei Schaltelementen vermeiden, so dass bei Schaltungen in definierten Ganggruppen jeweils nur ein Schaltelement gewechselt wird.

Aus der DE 10 2008 000 428 A1 der Anmelderin ist ein Mehrstufengetriebe in Planetenbauweise bekannt, welches einen Antrieb und einen Abtrieb aufweist, welche in einem Gehäuse angeordnet sind. Bei dem bekannten Getriebe sind zumindest vier Planetenradsätze, im Folgenden als erster, zweiter, dritter und vierter Planetenradsatz bezeichnet, mindestens acht drehbare Wellen - im Folgenden als Antriebswelle, Abtriebswelle, dritte, vierte, fünfte, sechste, siebte und achte Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise neun Vorwärtsgänge und ein Rückwärtsgang realisierbar sind.

Hierbei bilden der erste und der zweite Planetenradsatz, die vorzugsweise als Minus-Planetenradsätze, also mit negativer Standgetriebe-Übersetzung, ausgebildet sind, einen schaltbaren Vorschaltradsatz, wobei der dritte und der vierte Planetenradsatz einen Hauptradsatz bilden.

Bei dem bekannten Mehrstufengetriebe ist vorgesehen, dass die Stege des ersten und des zweiten Planetenradsatzes über die vierte Welle miteinander gekoppelt sind, welche mit einem Element des Hauptradsatzes verbunden ist, dass das Hohlrad des ersten Planetenradsatzes mit dem Sonnenrad des zweiten Planetenradsatzes über die achte Welle gekoppelt ist, welche über eine erste Kupplung mit der Antriebswelle lösbar verbindbar ist und dass das Sonnenrad des ersten Planetenradsatzes mittels der dritten Welle über eine erste Bremse an ein Gehäuse des Getriebes ankoppelbar und über eine zweite Kupplung mit der Antriebswelle lösbar verbindbar ist, wobei das Hohlrad des zweiten Planetenradsatzes mittels der fünften Welle über eine zweite Bremse an ein Gehäuse des Getriebes ankoppelbar ist. Zudem ist die siebte Welle mit zumindest einem Element des Hauptradsatzes ständig verbunden und über eine dritte Bremse an das Gehäuse des Getriebes ankoppelbar, wobei die sechste Welle mit zumindest einem weiteren Element des Hauptradsatzes ständig verbunden und über eine dritte Kupplung mit der Antriebswelle lösbar verbindbar ist; die Abtriebswelle ist mit zumindest einem weiteren Element des Hauptradsatzes ständig verbunden.

Vorzugsweise ist bei dem bekannten Getriebe die vierte Welle ständig mit dem Hohlrad des dritten Planetenradsatzes verbunden, wobei die sechste Welle ständig mit dem Hohlrad des vierten Planetenradsatzes und dem Steg des dritten Planetenradsatzes verbunden und über die dritte Kupplung mit der Antriebswelle lösbar verbindbar ist. Ferner ist die siebte Welle ständig mit den Sonnenrädern des dritten und vierten Planetenradsatzes verbunden und über die dritte Bremse an ein Gehäuse des Getriebes ankoppelbar. Der Abtrieb erfolgt hierbei über die ständig mit dem Steg des vierten Planetenradsatzes verbundene Abtriebswelle. Des Weiteren können der dritte und der vierte Planetenradsatz zu einem Ravigneaux-Satz mit einem gemeinsamen Steg und einem gemeinsamen Hohlrad zusammengesetzt bzw. reduziert sein.

Aus der US 2009/0305837 A1 ist ein Mehrstufengetriebe gemäß dem Oberbegriff des unabhängigen Anspruchs 1 bekannt.

Der vorliegenden Erfindung liegt die Aufgabe zugrunde, ein Mehrstufengetriebe der eingangs genannten Art vorzuschlagen, welches acht Vorwärtsgänge und einen Rückwärtsgang mit ausreichender Übersetzung aufweist, bei dem der Bauaufwand und die Baugröße, insbesondere die Baulänge, bzw. das Gewicht optimiert werden und zudem der Wirkungsgrad hinsichtlich der Schlepp- und Verzahnungsverluste verbessert wird. Zudem sollen bei dem erfindungsgemäßen Mehrstufengetriebe geringe Stützmomente auf die Schaltelemente wirken. Ferner soll sich das Getriebe sowohl für eine Front-Längs-Bauweise als auch für eine Front-Quer-Bauweise eignen.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches einen Antrieb und einen Abtrieb aufweist, welche in einem Gehäuse angeordnet sind. Des Weiteren sind zumindest vier Planetenradsätze, im Folgenden als erster, zweiter, dritter und vierter Planetenradsatz bezeichnet, acht drehbare Wellen - im Folgenden als Antriebswelle, Abtriebswelle, dritte, vierte, fünfte, sechste, siebte und achte Welle bezeichnet - sowie zumindest fünf vorzugsweise als Lamellenschaltelemente oder als formschlüssige Schaltelemente ausgeführte Schaltelemente, umfassend zwei Bremsen und drei Kupplungen, vorgesehen, deren selektives Eingreifen verschiedene Übersetzungsverhältnisse zwischen dem Antrieb und dem Abtrieb bewirkt, so dass vorzugsweise acht Vorwärtsgänge und ein Rückwärtsgang realisierbar sind.

Die Planetenradsätze sind axial betrachtet vorzugsweise in der Reihenfolge erster Planetenradsatz, zweiter Planetenradsatz, dritter Planetenradsatz, vierter Planetenradsatz angeordnet, wobei der erste, zweite und dritte Planetenradsatz vorzugsweise als Minus-Planetenradsätze ausgebildet sind und wobei der vierte Planetenradsatz vorzugsweise als Plus-Planetenradsatz ausgeführt ist. Im Rahmen weiterer Ausführungsformen der Erfindung kann die axiale Reihenfolge der Planetenradsätze beliebig sein.

Ein einfacher Minus-Planetenradsatz umfasst bekanntlich ein Sonnenrad, ein Hohlrad und einen Steg, an dem Planetenräder drehbar gelagert sind, die jeweils mit Sonnenrad und Hohlrad kämmen. Hierdurch weist das Hohlrad bei festgehaltenem Steg eine zum Sonnenrad entgegengesetzte Drehrichtung auf. Demgegenüber umfasst ein einfacher Plus-Planetenradsatz ein Sonnenrad, ein Hohlrad und einen Steg, an dem innere und äußere Planetenräder drehbar gelagert sind, wobei alle inneren Planetenräder mit dem Sonnenrad und alle äußeren Planetenräder mit dem Hohlrad kämmen, wobei jedes innere Planetenrad mit jeweils einem äußeren Planetenrad kämmt. Hierdurch weist das Hohlrad bei festgehaltenem Steg die gleiche Drehrichtung auf wie das Sonnenrad und es ergibt sich eine positive Standgetriebe-Übersetzung.

Gemäß der Erfindung ist das Sonnenrad des ersten Planetenradsatzes mit der dritten Welle verbunden, die über eine erste Bremse an das Gehäuse des Getriebes ankoppelbar ist und mit dem Hohlrad des dritten Planetenradsatzes verbunden ist, wobei die Antriebswelle mit dem Steg des ersten Planetenradsatzes verbunden und über eine erste Kupplung mit der fünften Welle lösbar verbindbar ist, die mit dem Hohlrad des zweiten Planetenradsatzes und dem Sonnenrad des dritten Planetenradsatzes verbunden ist.

Des Weiteren ist das Hohlrad des ersten Planetenradsatzes mit der sechsten Welle des Getriebes verbunden, die über eine zweite Kupplung mit der mit dem Sonnenrad des zweiten Planetenradsatzes verbundenen siebten Welle lösbar verbindbar ist, wobei die achte Welle mit dem Steg des dritten Planetenradsatzes und dem Sonnenrad des vierten Planetenradsatzes verbunden ist und wobei die mit dem Steg des vierten Planetenradsatzes verbundene vierte Welle über eine zweite Bremse an das Gehäuse des Getriebes ankoppelbar ist.

Des Weiteren ist die Abtriebswelle des Getriebes mit dem Hohlrad des vierten Planetenradsatzes und dem Steg des zweiten Planetenradsatzes verbunden, wobei erfindungsgemäß eine dritte Kupplung vorgesehen ist, welche die fünfte Welle mit der sechsten Welle lösbar verbindet.

Durch die erfindungsgemäße Ausgestaltung des Mehrstufengetriebes ergeben sich insbesondere für Personenkraftwagen geeignete Übersetzungen sowie eine erhöhte Gesamtspreizung des Mehrstufengetriebes, wodurch eine Verbesserung des Fahrkomforts und eine signifikante Verbrauchsabsenkung bewirkt werden.

Darüber hinaus wird mit dem erfindungsgemäßen Mehrstufengetriebe durch eine geringe Anzahl an Schaltelementen der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im Rückwärtsgang betätigt wird.

Des Weiteren ergibt sich bei dem erfindungsgemäßen Mehrstufengetriebe ein guter Wirkungsgrad in den Hauptfahrgängen bezüglich der Schlepp- und Verzahnungsverluste.

Ferner liegen geringe Drehmomente in den Schaltelementen und in den Planetenradsätzen des Mehrstufengetriebes vor, wodurch der Verschleiß bei dem Mehrstufengetriebe in vorteilhafter Weise reduziert wird. Zudem wird durch die geringen Drehmomente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetenradsätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im Folgenden anhand der beigefügten Figuren beispielhaft näher erläutert. In diesen stellen dar:
- Figur 1:: eine schematische Ansicht einer bevorzugten Ausführungsform eines erfindungsgemäßen Mehrstufengetriebes; und
- Figur 2:: ein beispielhaftes Schaltschema für ein Mehrstufengetriebe gemäß Figur 1.

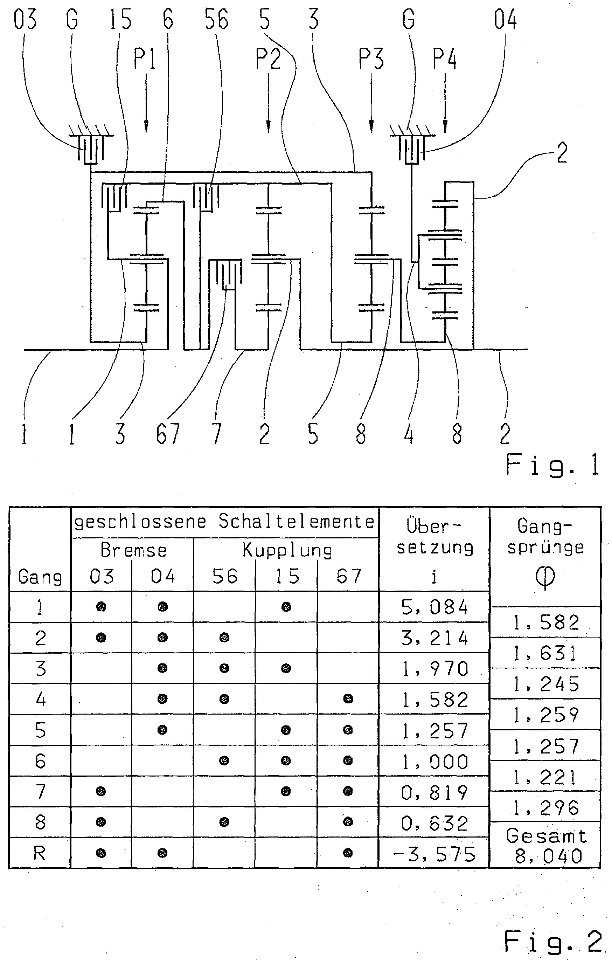

In Figur 1 ist ein erfindungsgemäßes Mehrstufengetriebe mit einer Antriebswelle 1, einer Abtriebswelle 2 und vier Planetenradsätzen P1, P2, P3 und P4 dargestellt, welche in einem Gehäuse G angeordnet sind. Der erste, zweite und dritte Planetenradsatz P1, P2, P3 sind bei dem in Figur 1 gezeigten Beispiel als Minus-Planetenradsätze ausgebildet, wobei der vierte Planetenradsatz P4 als Plus-Planetenradsatz ausgeführt ist. Gemäß der Erfindung kann zumindest einer der Planetenradsätze P1, P2, P3 als Plus-Planetenradsatz ausgeführt sein, wenn gleichzeitig die Steg- und Hohlradanbindung getauscht und der Betrag der Standgetriebeübersetzung im Vergleich zu der Ausführung als Minus-Planetenradsatz um 1 erhöht wird.

Bei dem gezeigten Ausführungsbeispiel sind die Planetenradsätze axial betrachtet in der Reihenfolge erster Planetenradsatz P1, zweiter Planetenradsatz P2, dritter Planetenradsatz P3, vierter Planetenradsatz P4 angeordnet.

Wie aus Figur 1 ersichtlich, sind fünf Schaltelemente, nämlich zwei Bremsen 03, 04 und drei Kupplungen 15, 56, 67 vorgesehen. Die räumliche Anordnung der Schaltelemente kann beliebig sein und wird nur durch die Abmessungen und die äußere Formgebung begrenzt. Die Kupplungen und die Bremsen des Getriebes sind vorzugsweise als reib- oder formschlüssige Schaltelemente ausgeführt.

Mit diesen Schaltelementen ist ein selektives Schalten von acht Vorwärtsgängen und einem Rückwärtsgang realisierbar. Das erfindungsgemäße Mehrstufengetriebe weist insgesamt acht drehbare Wellen auf, nämlich die Wellen 1, 2, 3, 4, 5, 6, 7 und 8, wobei die Antriebswelle die erste Welle 1 und die Abtriebswelle die zweite Welle 2 des Getriebes bildet. Vorzugsweise ist die Abtriebswelle 2 koaxial zur Antriebswelle 1 angeordnet, wodurch eine Front-Längs-Bauweise realisierbar ist.

Erfindungsgemäß ist bei dem Mehrstufengetriebe gemäß Figur 1 vorgesehen, dass das Sonnenrad des ersten Planetenradsatzes P1 mit der dritten Welle 3 verbunden ist, welche über eine erste Bremse 03 an das Gehäuse G des Getriebes ankoppelbar ist und mit dem Hohlrad des dritten Planetenradsatzes P3 verbunden ist, wobei die Antriebswelle 1 mit dem Steg des ersten Planetenradsatzes P1 verbunden und über eine erste Kupplung 15 mit der fünften Welle 5 lösbar verbindbar ist, welche mit dem Hohlrad des zweiten Planetenradsatzes P2 und dem Sonnenrad des dritten Planetenradsatzes P3 verbunden ist.

Wie aus Figur 1 ersichtlich, ist das Hohlrad des ersten Planetenradsatzes P1 mit der sechsten Welle 6 verbunden, die über eine zweite Kupplung 67 mit der mit dem Sonnenrad des zweiten Planetenradsatzes P2 verbundenen siebten Welle 7 lösbar verbindbar ist, wobei die achte Welle 8 mit dem Steg des dritten Planetenradsatzes P3 und dem Sonnenrad des vierten Planetenradsatzes P4 verbunden ist. Die mit dem Steg des vierten Planetenradsatzes P4 verbundene vierte Welle 4 ist über eine zweite Bremse 04 an das Gehäuse G des Getriebes ankoppelbar.

Ferner ist die Abtriebswelle 2 mit dem Hohlrad des vierten Planetenradsatzes P4 und dem Steg des zweiten Planetenradsatzes P2 verbunden, wobei erfindungsgemäß eine dritte Kupplung 56 vorgesehen ist, welche die fünfte Welle 5 mit der sechsten Welle 6 lösbar verbindet.

In Figur 2 ist ein beispielhaftes Schaltschema eines Mehrstufengetriebes gemäß Figur 1 dargestellt. Für jeden Gang werden drei Schaltelemente geschlossen. Dem Schaltschema können die jeweiligen Übersetzungen i der einzelnen Gangstufen und die daraus zu bestimmenden Gangsprünge bzw. Stufensprünge φ zum nächst höheren Gang beispielhaft entnommen werden, wobei der Wert 8,040 die Spreizung des Getriebes darstellt.

Die Werte für die Standgetriebeübersetzungen der als Minus-Planetenradsätze ausgeführten Planetenradsätze P1, P2, P3 sind bei dem gezeigten Beispiel jeweils -1,720, -1,630 und -1,580, wobei die Standgetriebeübersetzung des als Plus-Planetenradsatzes ausgeführten vierten Planetenradsatzes P4 1,970 beträgt. Aus Figur 2 wird ersichtlich, dass bei sequentieller Schaltweise jeweils nur ein Schaltelement zugeschaltet und ein Schaltelement abgeschaltet werden muss, da zwei benachbarte Gangstufen zwei Schaltelemente gemeinsam benutzen. Ferner wird ersichtlich, dass eine große Spreizung bei kleinen Gangsprüngen erzielt wird.

Der erste Vorwärts-Gang ergibt sich durch Schließen der ersten und zweiten Bremse 03, 04 und der ersten Kupplung 15, der zweite Vorwärts-Gang durch Schließen der ersten und zweiten Bremse 03, 04 und der dritten Kupplung 56, der dritte Vorwärts-Gang durch Schließen der zweiten Bremse 04 und der ersten und dritten Kupplung 15, 56, der vierte Vorwärts-Gang durch Schließen der zweiten Bremse 04 und der zweiten und dritten Kupplung 67, 56, der fünfte Vorwärts-Gang durch Schließen der zweiten Bremse 04 und der ersten und zweiten Kupplung 15, 67, der sechste Vorwärts-Gang durch Schließen der ersten, zweiten und dritten Kupplung 15, 67, 56, der siebte Vorwärts-Gang durch Schließen der ersten Bremse 03 und der ersten und zweiten Kupplung 15, 67 und der achte Vorwärts-Gang ergibt sich durch Schließen der ersten Bremse 03 und der zweiten und dritten Kupplung 67, 56, wobei sich der Rückwärtsgang durch Schließen der ersten und zweiten Bremse 03, 04 und der zweiten Kupplung 67 ergibt.

Dadurch, dass im ersten Vorwärtsgang und im ersten Rückwärtsgang die erste und zweite Bremse 03, 04 geschlossen sind, können diese Schaltelemente als Anfahrelemente eingesetzt werden.

Gemäß der Erfindung ergeben sich auch bei gleichem Getriebeschema je nach Schaltlogik unterschiedliche Gangsprünge, so dass eine anwendungs- bzw. fahrzeugspezifische Variation ermöglicht wird.

Im Rahmen einer nicht dargestellten Weiterbildung der Erfindung kann eine elektrische Maschine vorgesehen sein, welche direkt oder über eine Radstufe oder einen Kettentrieb mit der Antriebswelle 1 des Getriebes verbunden ist. Ferner kann eine vierte Kupplung vorgesehen sein, durch die der Verbrennungsmotor vom Getriebe abgekoppelt werden kann, wodurch sämtliche Gänge des Getriebes rein elektrisch gefahren werden können.

Erfindungsgemäß ist es ferner optional möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können ein Achsdifferential und/ oder ein Verteilerdifferential angeordnet werden.

Im Rahmen einer vorteilhaften Weiterbildung der Erfindung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Antriebs-Motors verbunden ist.

Das erfindungsgemäße Mehrstufengetriebe ermöglicht außerdem die Anordnung eines Torsionsschwingungsdämpfers zwischen Antriebsmotor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z. B. ein hydraulischer oder elektrischer Retarder oder dergleichen, angeordnet sein, was insbesondere für den Einsatz in Nutzkraftfahrzeugen von besonderer Bedeutung ist. Des Weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Reibschaltelemente können als lastschaltbare Kupplungen oder Bremsen ausgebildet sein. Insbesondere können kraftschlüssige Kupplungen oder Bremsen, wie z. B. Lamellenkupplungen, Bandbremsen und/ oder Konuskupplungen, verwendet werden.

Ein weiterer Vorteil des hier vorgestellten Mehrstufengetriebes besteht darin, dass auf jeder Welle als Generator und/ oder als zusätzliche Antriebsmaschine eine elektrische Maschine anbringbar ist.

### Bezugszeichen

- 1: erste Welle, Antriebswelle
- 2: zweite Welle, Abtriebswelle
- 3: dritte Welle
- 4: vierte Welle
- 5: fünfte Welle
- 6: sechste Welle
- 7: siebte Welle
- 8: achte Welle
- 03: erste Bremse
- 04: zweite Bremse
- 15: erste Kupplung
- 56: dritte Kupplung
- 67: zweite Kupplung
- G: Gehäuse
- P1: erster Planetenradsatz
- P2: zweiter Planetenradsatz
- P3: dritter Planetenradsatz
- P4: vierter Planetenradsatz
- i: Übersetzung
- φ: Stufensprung

## Patentansprüche

1. Mehrstufengetriebe in Planetenbauweise, insbesondere Automatgetriebe für ein Kraftfahrzeug, umfassend eine Antriebswelle (1), eine Abtriebswelle (2) und vier Planetenradsätze (P1, P2, P3, P4), welche in einem Gehäuse (G) angeordnet sind, insgesamt acht drehbare Wellen (1, 2, 3, 4, 5, 6, 7, 8) sowie mindestens fünf Schaltelemente (03, 04, 15, 56, 67), umfassend Bremsen (03, 04) und Kupplungen (15, 56, 67), deren selektives Eingreifen-verschiedene Übersetzungsverhältnisse zwischen der Antriebswelle (1) und der Abtriebswelle (2) bewirkt, so dass acht Vorwärtsgänge und ein Rückwärtsgang realisierbar sind, **dadurch gekennzeichnet, dass** ein Sonnenrad des ersten Planetenradsatzes (P1) mit einer dritten Welle (3) verbunden ist, welche über eine erste Bremse (03) an das Gehäuse (G) ankoppelbar ist und mit einem Hohlrad des dritten Planetenradsatzes (P3) verbunden ist, wobei die Antriebswelle (1) mit einem Steg des ersten Planetenradsatzes (P1) verbunden und über eine erste Kupplung (15) mit einer fünften Welle (5) lösbar verbindbar ist, welche mit einem Hohlrad des zweiten Planetenradsatzes (P2) und einem Sonnenrad des dritten Planetenradsatzes (P3) verbunden ist, wobei ein Hohlrad des ersten Planetenradsatzes (P1) mit einer sechsten Welle (6) verbunden ist, die über eine zweite Kupplung (67) mit einer mit einem Sonnenrad des zweiten Planetenradsatzes (P2) verbundenen siebten Welle (7) lösbar verbindbar ist, wobei eine achte Welle (8) mit einem Steg des dritten Planetenradsatzes (P3) und einem Sonnenrad des vierten Planetenradsatzes (P4) verbunden ist und eine mit einem Steg des vierten Planetenradsatzes (P4) verbundene vierte Welle (4) über eine zweite Bremse (04) an das Gehäuse (G) ankoppelbar ist, wobei die Abtriebswelle (2) mit einem Hohlrad des vierten Planetenradsatzes (P4) und einem Steg des zweiten Planetenradsatzes (P2) verbunden ist und wobei eine dritte Kupplung (56) vorgesehen ist, welche die fünfte Welle (5) mit der sechsten Welle (6) lösbar verbindet.

2. Mehrstufengetriebe nach Anspruch 1, **dadurch gekennzeichnet, dass** der erste, zweite und dritte Planetenradsatz (P1, P2, P3) als Minus-Planetenradsätze ausgebildet sind und dass der vierte Planetenradsatz (P4) als Plus-Planetenradsatz ausgeführt ist.

3. Mehrstufengetriebe nach Anspruch 1 oder 2, **dadurch gekennzeichnet, dass** die Planetenradsätze (P1, P2, P3, P4) axial betrachtet in der Reihenfolge erster Planetenradsatz (P1), zweiter Planetenradsatz (P2), dritter Planetenradsatz (P3), vierter Planetenradsatz (P4) angeordnet sind.

4. Mehrstufengetriebe nach einem der vorangehenden Ansprüche, **dadurch gekennzeichnet, dass** eine elektrische Maschine vorgesehen ist, welche mit der Antriebswelle (1) des Getriebes direkt oder über eine Radstufe oder einen Kettentrieb verbunden ist.

5. Mehrstufengetriebe nach Anspruch 4, **dadurch gekennzeichnet, dass** ein Verbrennungsmotor mittels einer vierten Kupplung vom Getriebe abgekoppelt werden kann, wodurch sämtliche Gänge des Getriebes rein elektrisch gefahren werden können.

6. Mehrstufengetriebe nach einem der vorangehenden Absprüche, **dadurch gekennzeichnet, dass** sich der erste Vorwärts-Gang durch Schließen der ersten und zweiten Bremse (03, 04) und der ersten Kupplung (15), der zweite Vorwärts-Gang durch Schließen der ersten und zweiten Bremse (03, 04) und der dritten Kupplung (56), der dritte Vorwärts-Gang durch Schließen der zweiten Bremse (04) und der ersten und dritten Kupplung (15, 56), der vierte Vorwärts-Gang durch Schließen der zweiten Bremse (04) und der zweiten und dritten Kupplung (67, 56), der fünfte Vorwärts-Gang durch Schließen der zweiten Bremse (04) und der ersten und zweiten Kupplung (15, 67), der sechste Vorwärts-Gang durch Schließen der ersten, zweiten und dritten Kupplung (15, 67, 56), der siebte Vorwärts-Gang durch Schließen der ersten Bremse (03) und der ersten und zweiten Kupplung (15, 67) und dass sich der achte Vorwärts-Gang durch Schließen der ersten Bremse (03) und der zweiten und dritten Kupplung (67, 56) ergibt, wobei sich der Rückwärtsgang durch Schließen der ersten und zweiten Bremse (03, 04) und der zweiten Kupplung (67) ergibt.

## Claims

1. Multiple gear transmission of planetary design, in particular automatic transmission for a motor vehicle, comprising a drive shaft (1), an output shaft (2) and four planetary gear sets (P1, P2, P3, P4) which are arranged in a housing (G), a total of eight rotatable shafts (1, 2, 3, 4, 5, 6, 7, 8) and at least five shifting elements (03, 04, 15, 56, 67), comprising brakes (03, 04) and clutches (15, 56, 67), the selective engagement of which brings about different transmission ratios between the drive shaft (1) and the output shaft (2), with the result that eight forward gears and one reverse gear can be realized, **characterized in that** a sun gear of the first planetary gear set (P1) is connected to a third shaft (3) which can be coupled via a first brake (03) to the housing (G) and is connected to an internal gear of the third planetary gear set (P3), the drive shaft (1) being connected to a spider of the first planetary gear set (P1) and being capable of being connected releasably via a first clutch (15) to a fifth shaft (5) which is connected to an internal gear of the second planetary gear set (P2) and a sun gear of the third planetary gear set (P3), an internal gear of the first planetary gear set (P1) being connected to a sixth shaft (6) which is capable of being connected releasably via a second clutch (67) to a seventh shaft (7) connected to a sun gear of the second planetary gear set (P2), an eighth shaft (8) being connected to a spider of the third planetary gear set (P3) and a sun gear of the fourth planetary gear set (P4), and it being possible for a fourth shaft (4) which is connected to a spider of the fourth planetary gear set (P4) to be coupled via a second brake (04) to the housing (G), the output shaft (2) being connected to an internal gear of the fourth planetary gear set (P4) and to a spider of the second planetary gear set (P2), and a third clutch (56) being provided, which connects the fifth shaft (5) to the sixth shaft (6) releasably.

2. Multiple gear transmission according to Claim 1, **characterized in that** the first, second and third planetary gear sets (P1, P2, P3) are configured as negative planetary gear sets, and **in that** the fourth planetary gear set (P4) is configured as a positive planetary gear set.

3. Multiple gear transmission according to Claim 1 or 2, **characterized in that**, as viewed axially, the planetary gear sets (P1, P2, P3, P4) are arranged in the sequence first planetary gear set (P1), second planetary gear set (P2), third planetary gear set (P3), fourth planetary gear set (P4).

4. Multiple gear transmission according to one of the preceding claims, **characterized in that** an electric machine is provided which is connected to the drive shaft (1) of the transmission directly or via a gear stage or a chain drive.

5. Multiple gear transmission according to Claim 4, **characterized in that** an internal combustion engine can be decoupled from the transmission by means of a fourth clutch, as a result of which all the gears of the transmission can be driven purely electrically.

6. Multiple gear transmission according to one of the preceding claims, **characterized in that** the first forward gear results from closure of the first and second brakes (03, 04) and the first clutch (15), the second forward gear results from closure of the first and second brakes (03, 04) and the third clutch (56), the third forward gear results from closure of the second brake (04) and the first and third clutches (15, 56), the fourth forward gear results from closure of the second brake (04) and the second and third clutches (67, 56), the fifth forward gear results from closure of the second brake (04) and the first and second clutches (15, 67), the sixth forward gear results from closure of the first, second and third clutches (15, 67, 56), the seventh forward gear results from closure of the first brake (03) and the first and second clutches (15, 67), and **in that** the eighth forward gear results from closure of the first brake (03) and the second and third clutches (67, 56), the reverse gear resulting from closure of the first and second brakes (03, 04) and the second clutch (67).

## Revendications

1. Transmission à plusieurs rapports et structure planétaire, en particulier transmission automatique pour véhicule automobile, comprenant
un arbre d'entraînement (1),
un arbre entraîné (2) et
quatre jeux (P1, P2, P3, P4) de roues planétaires disposées dans un boîtier (G),
en tout huit arbres rotatifs (1, 2, 3, 4, 5, 6, 7, 8) ainsi que
au moins cinq éléments (03, 04, 15, 56, 67) de changement de rapport comprenant des freins (03, 04) et des embrayages (15, 56, 67) dont l'engagement sélectif a pour effet l'établissement de rapports différents de transmission entre l'arbre d'entraînement (1) et l'arbre entraîné (2) de telle sorte qu'en tout huit rapports avant et un rapport arrière puissent être réalisés,
**caractérisée en ce que**
une roue solaire du premier jeu (P1) de roues planétaires est raccordée à un troisième arbre (3) qui peut être accouplé au boîtier (G) par l'intermédiaire d'un premier frein (03) et est raccordé à une roue creuse du troisième jeu (P3) de roues planétaires,
**en ce que** l'arbre d'entraînement (1) est raccordé à un porte-pignon du premier jeu (P1) de roues planétaires et peut être relié de manière libérable par l'intermédiaire d'un premier embrayage (15) à un cinquième arbre (5) qui est raccordé à une roue creuse du deuxième jeu (P2) de roues planétaires et à une roue solaire du troisième jeu (P3) de roues planétaires,
**en ce qu'**une roue creuse du premier jeu (P1) de roues planétaires est raccordée à un sixième arbre (6) qui peut être relié de manière libérable par l'intermédiaire d'un deuxième embrayage (67) à un septième arbre (7) relié à une roue solaire du deuxième jeu (P2) de roues planétaires,
**en ce qu'**un huitième arbre (8) est relié à un porte-pignon du troisième jeu (P3) de roues planétaires et à une roue solaire du quatrième jeu (P4) de roues planétaires et
**en ce qu'**un quatrième arbre (4) relié à un porte-pignon du quatrième jeu (P4) de roues planétaires peut être accouplé au boîtier (G) par l'intermédiaire d'un deuxième frein (04),
**en ce que** l'arbre entraîné (2) est relié à une roue creuse du quatrième jeu (P4) de roues planétaires et à un porte-pignon du deuxième jeu (P2) de roues planétaires et
**en ce qu'**un troisième embrayage (56) est prévu qui relie de manière libérable le cinquième arbre (5) au sixième arbre (6).

2. Transmission à plusieurs rapports selon la revendication 1, **caractérisée en ce que** le premier, le deuxième et le troisième jeu (P1, P2, P3) de roues planétaires sont configurés comme jeux de roues planétaires moins et **en ce que** le quatrième jeu (P4) de roues planétaires est configuré comme jeu de roues planétaires plus.

3. Transmission à plusieurs rapports selon la revendication 1 ou 2, **caractérisée en ce que** les jeux (P1, P2, P3, P4) de roues planétaires sont disposés axialement dans la succession : premier jeu (P1) de roues planétaires, deuxième jeu (P2) de roues planétaires, troisième jeu (P3) de roues planétaires, quatrième jeu (P4) de roues planétaires.

4. Transmission à plusieurs rapports selon l'une des revendications précédentes, **caractérisée en ce qu'**une machine électrique qui est reliée directement, par un étage de roue ou par un entraînement à chaîne à l'arbre d'entraînement (1) est prévue.

5. Transmission à plusieurs rapports selon la revendication 4, **caractérisée en ce qu'**un moteur à combustion interne peut être accouplé au moyen d'un quatrième embrayage par la transmission, de manière à pouvoir déplacer de manière purement électrique l'ensemble des rapports de la transmission.

6. Transmission à plusieurs rapports selon l'une des revendications précédentes, **caractérisée en ce que** le premier rapport avant est obtenu par fermeture du premier et du deuxième frein (03, 04) et du premier embrayage (15), le deuxième rapport avant par fermeture du premier et du deuxième frein (03, 04) et du troisième embrayage (56), le troisième rapport avant par fermeture du deuxième frein (04) et du premier et troisième embrayage (15, 56), le quatrième rapport avant par fermeture du deuxième frein (04) et du deuxième et du troisième embrayage (67, 56), le cinquième rapport avant par fermeture du deuxième frein (04) et du premier et du deuxième embrayage (15, 67), le sixième rapport avant par fermeture du premier, du deuxième et du troisième embrayage (15, 67, 56), le septième rapport avant par fermeture du premier frein (03) et du premier et du deuxième embrayage (15, 67) et **en ce que** le huitième rapport avant est obtenu par fermeture du premier frein (03) et du deuxième et du troisième embrayage (67, 56), le rapport arrière étant obtenu par fermeture du premier et du deuxième frein (03, 04) et du deuxième embrayage (67).
